# EUROPÄISCHE PATENTSCHRIFT

(11) **EP 3 686 423 B1**
(45) Veröffentlichungstag und Bekanntmachung des Hinweises auf die Patenterteilung: **23.11.2022**
(21) Anmeldenummer: 19153139.1
(22) Anmeldetag: 22.01.2019
(51) Int. Cl.: F03D 1/06

(54) **ROTORBLATT FÜR EINE WINDTURBINE**
ROTOR BLADE FOR A WIND TURBINE
PALE DE ROTOR POUR UNE ÉOLIENNE

(43) Veröffentlichungstag der Anmeldung: 29.07.2020
(73) Patentinhaber: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG

(56) Entgegenhaltungen:
- EP-B1- 2 998 572
- WO-A1-2015/067387
- DE-A1-102014 115 524

## Beschreibung

### Technisches Gebiet

Die Erfindung betrifft ein Rotorblatt für eine Windturbine, mit einer Rotorblattwurzel, einer Rotorblattspitze, einer Anströmkante und einer Abströmkante. Die Anströmkante und die Abströmkante definieren eine Profilsehne. Sie betrifft weiter einen Rotorkranz mit einem Rotorblatt und eine Windturbine mit einem Rotorblatt.

### Stand der Technik

Im Stand der Technik sind Rotorblätter, Rotorkränze und Windturbinen grundsätzlich bekannt.

So beschreibt beispielsweise die EP 2 998 572 B1 ein Windenergieanlagenrotorblatt aufweisend eine Oberseite, eine Unterseite, eine Vorderkante, eine Hinterkante, eine Nabenbefestigung und eine Blattspitze, wobei das Windenergieanlagenrotorblatt in einen Nabenbereich, einen Mittelbereich und einen Blattspitzenbereich eingeteilt und ein Wurzelbereich von der Nabenbefestigung bis zur maximalen Blatttiefe definiert ist. Innerhalb des Windenergieanlagenrotorblattes ist ein radial nach außen verlaufender Luftleitkanal zur Leitung von abgesaugter Luft aus einem Absaugbereich zu einem im Blattspitzenbereich angeordneten Ausblasbereich vorgesehen. Es erfolgt eine Grenzschichtabsaugung, wobei die Absaugung der Luft auf der Oberseite des Windenergieanlagenrotorblattes erfolgt, und ein Grenzschichtzaun im Nabenbereich nahe der Nabenbefestigung zur Verhinderung einer Strömung in Richtung Nabenbefestigung vorgesehen ist.

Bei Rotorblättern von Windenergieanlagen kann es im Bereich der Blattspitze zu einem unerwünschten Druckausgleich zwischen der Druckseite und der Saugseite des Rotorblatts kommen, bei dem die Luft die Blattspitze umströmt. Dieser Effekt führt zu einem verringerten Auftrieb im Blattspitzenbereich und zu ausgeprägten Verwirbelungen, die den Strömungswiderstand erhöhen. Üblicherweise werden bei derartigen Rotorblättern im Blattspitzenbereich kleine Blattanstellwinkel und Profile mit geringem oder gar keinem Auftrieb und verringerter Sehnenlänge eingesetzt. Dadurch können die Verwirbelungen reduziert werden, wobei es jedoch bei einem suboptimalen Auftrieb im Bereich der Blattspitze bleibt.

Die Druckschrift DE 10 2014 115 524 A1 beschreibt ein Windenergieanlagenrotorblatt mit sich von der Blattwurzel zur Blattspitze hin in der folgenden Reihenfolge aneinander anschließenden Abschnitten. Das Rotorblatt umfasst einen Blattanschlussabschnitt zur Verbindung mit einer Rotornabe, einem Rotorblatthauptteil, der ein aerodynamisches Profil, eine Saugseite und eine Druckseite aufweist, einem Übergangsabschnitt, der eine Krümmung zur Saugseite hin oder zur Druckseite hin aufweist, und einem Winglet, das eine Vielzahl von Profilen mit jeweils einer Profilsehne und einem Profilsehnenmittelpunkt aufweist. Weiterhin umfasst das Windenergieanlagenrotorblatt eine Wingletfläche, in der die Profilsehnen angeordnet sind, eine Mittellinie, die die Profilsehnenmittelpunkte miteinander verbindet, eine Profilendkante, eine Profilnasenkante, eine Höhe, einen sich an den Übergangsabschnitt anschließenden Basisabschnitt, einen an die Blattspitze angrenzenden Spitzenabschnitt und einen den Basisabschnitt und den Spitzenabschnitt miteinander verbindenden Mittelabschnitt. Ein Sweep-Winkel ist zwischen einer Bezugslinie, die in der Wingletfläche und orthogonal zu einer Profilsehne eines an den Übergangsabschnitt angrenzenden Profils des Winglets angeordnet ist, und der Mittellinie in dem Spitzenabschnitt größer ist als in dem Basisabschnitt angeordnet, wobei der Sweep-Winkel von der Bezugslinie in Richtung zu der Profilendkante des Winglets hin gemessen wird. Die Profilendkante des Winglets ist in mindestens einem Abschnitt konkav gekrümmt. Die WO2015067387 A1 beschriebt ein weiteres Beispiel einer Windkraftanlage wobei Winglets an den Rotorblättern angeordnet sind.

Bei den bekannten Rotorblättern von Windkraftanlagen lässt sich trotz des Einsatzes von Winglets die Umströmung an der Blattspitze nicht vollständig vermeiden. Bekannte Rotorblätter weisen im Einsatz noch immer starke Verwirbelungen auf, was den Wirkungsgrad des Rotorblattes und damit der Windkraftanlage negativ beeinflusst. Zusätzlich erzeugen die im Stand der Technik bekannten Windturbinenanlagen ein großes Lärmaufkommen.

### Darstellung der Erfindung

Aufgabe der Erfindung ist es, ein dem eingangs genannten technischen Gebiet zugehörendes Rotorblatt für eine Windturbinenanlage zu schaffen, welches im Betrieb einen höheren Wirkungsgrad und ein reduziertes Lärmaufkommen ermöglicht.

Die Lösung der Aufgabe ist durch die Merkmale des Anspruchs 1 definiert. Die Erfindung umfasst ein Rotorblatt für eine Windturbine mit einer Rotorblattwurzel, einer Rotorblattaussenkante, einer Anströmkante und einer Abströmkante, wobei die Anströmkante und die Abströmkante eine Profilsehne definieren, deren Länge von der Rotorblattwurzel zu der Rotorblattaussenkante zunehmend ausgebildet ist. Das Rotorblatt umfasst Profilsehnenmittelpunkte, die von der Rotorblattwurzel zur Rotorblattaußenkante verlaufend eine Rotorflügelmittellinie definieren, und die Rotorflügelmittellinie die Rotorblattaussenkante in einen Anströmkantenabschnitt und einen Abströmkantenabschnitt teilt. Des Weiteren ist an der Rotorblattaußenkante ein Winglet angeordnet, welches sich lediglich entlang des Abströmkantenabschnitts erstreckt.

Als Rotorblatt im Sinne der Erfindung ist ein Rotorblatt zu verstehen, welches insbesondere für den Einsatz in einer Windkraftanlage geeignet ist. Somit muss der Zweck erfüllt sein, dass das Rotorblatt bzw. der gesamte Rotorkranz von anströmendem Wind in Bewegung überführt werden kann. Im Gegensatz hierzu ist ein Rotorblatt im Sinne der Erfindung von derartigen Rotorblättern zu unterscheiden, welche beispielsweise von anströmendem Wasser in Bewegung versetzt werden. Dies ist beispielhaft bei Wasserkraftwerken der Fall. Ebenso sind bekannte Rotorblätter von einem Rotorblatt im Sinne der Erfindung zu unterscheiden, die dafür eingesetzt werden im angetriebenen Zustand eine Fluidströmung zu bewirken. Dies ist beispielsweise bei Schiffsantriebsschrauben oder Luftventilatoren der Fall.

Dadurch wird beispielsweise der technische Vorteil erreicht, dass eine verbesserte Wirbelablösung an der Abströmkante und insbesondere in dem an dem Abströmkantenabschnitt angrenzenden Bereich der Abströmkante erreicht werden kann. Dadurch kann ein signifikant erhöhter Wirkungsgrad der gesamten Windturbinenanlage erreicht werden. Zusätzlich lässt sich eine erhebliche Lärmreduktion bewirken, welche den Einsatz des erfindungsgemäßen Rotorblattes deutlich vielseitiger werden lässt. Beispielsweise ist es somit möglich eine Windturbine mit einem erfindungsgemäßen Rotorblatt in unmittelbarer Nähe von Wohngebieten einzusetzen.

Gemäß einer bevorzugten Ausführungsform, nimmt ein Abstand A zwischen dem Abströmkantenabschnitt und einem Fuß des Winglets von der Rotorflügelmittellinie in Richtung der Abströmkante zu. Dadurch wird beispielsweise der technische Vorteil erreicht, dass die Höhe des Winglets in Richtung der Abströmkante kontinuierlich zunimmt. Die kontinuierliche Zunahme ermöglicht wiederum eine zusätzliche Verbesserung des Wirbelablöseverhaltens, da ein Ablösen der laminaren Strömung am Rotorblatt länger verhindert werden kann. Hierdurch werden der Wirkungsgrad und die Lärmreduktion zusätzlich verbessert.

Um eine optimale Umströmung des Winglets zu bewirken und ungewollte Grenzschichtablösungen und Turbulenzen im Betrieb des Rotorblattes zu reduzieren, ist der Fuß des Winglets in der Rotorblattebene kreisförmig ausgebildet. Dadurch kann insbesondere bei tieferen Windgeschwindigkeiten mehr Drehmoment erzeugt werden, da das Fluid durch die Umleitung mehr Widerstand erfährt. Insgesamt wird damit der Wirkungsgrad weiter erhöht.

Gemäß einer weiteren bevorzugten Ausführungsform, ist der kreisförmige Fuß des Winglets Teil eines Rotationskreises des Rotorblattes. Dadurch wird beispielsweise der technische Vorteil erreicht, dass die Höhe des Winglets in Richtung der Abströmkante überproportional zunimmt. Die überproportionale Zunahme der Winglethöhe ermöglicht wiederum eine zusätzliche Verbesserung des Wirbelablöseverhaltens, wodurch der Wirkungsgrad und die Lärmreduktion zusätzlich verbessert werden können. Durch eine geeignete Nachneigung des Rotorblattes kann der Effekt der überproportionalen Höhenzunahme des Winglets begünstigt werden. Aufgrund der Zunahme der Profilsehnenlänge von der Rotorblattwurzel zu der Rotorblattaussenkante steht durch die Nachneigung des Rotorblattes ein besonders großer Flächenanteil des Rotorblattes im Bereich des Abströmkantenabschnitts als Winglet zu Verfügung.

Insbesondere im äußeren Bereich des Rotorblattes ist es im Vergleich zu dem inneren Bereich des Rotorblattes aufgrund der höheren Geschwindigkeiten vorteilhaft, wenn eine Profildicke von der Rotorblattwurzel zu der Rotorblattaussenkante abnimmt. Dadurch wird die Saugkraft am äußeren Ende abgeschwächt, wodurch die Ausbildung von Druckunterschieden reduziert werden kann.

Um ein besonders reibungsarmen Übergang von der Rotorblattwurzel zu der Rotorblattdicke zu realisieren, ist ein Verhältnis der Profildicke zur der Länge der Profilsehne entlang der Flügellängsachse nahezu konstant ausgebildet.

Aufgrund der unterschiedlichen Geschwindigkeiten, wie sie im Betrieb am Rotorblatt zwischen Rotorblattwurzel und Rotorblattaußenkante auftreten, kommen den unterschiedlichen Abschnitten des Rotorblattes unterschiedliche Aufgaben bzw. Wirkungen zu. Beispielsweise wird dem im Bereich der Rotorblattwurzel angeordneten Bereich des Rotorflügels die Aufgabe des Anlaufens oder des Startens zugeordnet. Mit anderen Worten ist es für diesen Bereich von Bedeutung auch bei geringen Luft- bzw. Windgeschwindigkeiten Auftrieb zu ermöglichen und somit das Anlaufen des Rotorblattes zu bewirken. Um das Anlaufen zu bewirken, weist das Rotorblatt an der Rotorblattwurzel einen Einstellwinkel von mindestens 30° auf. Der Anlaufwinkel kann in Anhängigkeit des erwünschten Effektes jedoch auch größer oder kleiner ausgebildet sein.

Wie bereits ausgeführt, kommen aufgrund der unterschiedlichen Bewegungsgeschwindigkeiten, wie sie im Betrieb am Rotorblatt zwischen Rotorblattwurzel und Rotorblattaußenkante auftreten, den unterschiedlichen Abschnitten des Rotorblattes unterschiedliche Aufgaben bzw. Wirkungen zu. Beispielsweise ist im Bereich der Rotorblattaußenkante der sogenannte Widerstandsflügelabschnitt zugeordnet. Mit anderen Worten ist es für diesen Bereich von Bedeutung, möglichst viel Widerstand zu erzeugen, um auch bei geringen Luft- bzw. Windgeschwindigkeiten eine möglichst hohe Drehzahl sowie ein möglichst großes Drehmoment zu ermöglichen. Um einen möglichst großen Widerstand zu erreichen und um das Rotorblatt in Bewegung zu halten, weist das Rotorblatt an der Rotorblattaussenkante einen Einstellwinkel von maximal 5° auf.

Gemäß einer besonders bevorzugten Ausführungsform, ist ein Einstellwinkel an der Rotorblattaussenkante an der Anströmkante größer Null und an der Abströmkante kleiner oder gleich Null. Dieser Übergang des Anstellwinkels von der Anströmkante bis hin zur Abströmkante wird durch eine Wölbung der Profilsehne im Bereich der Rotorblattaußenkante erreicht. Das Maß der Wölbung hängt hierbei mit dem gewünschten Widerstand und der bezweckten Umfangsgeschwindigkeit des Rotorblattes zusammen. Dadurch wird beispielsweise der technische Effekt erreicht, dass die Abströmkante des Rotorblattes einen nahezu laminaren Strömungszustand im Fluid hinterlässt. Dadurch hat das nachfolgende Rotorblatt kaum mit Verwirbelungen im Fluid zu kämpfen, wodurch ein optimaler Wirkungsgrad bei jedem der nachfolgenden Rotorflügel erreicht werden kann.

Wie bereits ausgeführt kann der Einstellwinkel in Abhängigkeit des Abschnitts des Rotorblattes unterschiedlich sein. Um ungewollte Grenzschichtablösungen und Turbulenzen im Betrieb des Rotorblattes zu reduzieren, weist das Rotorblatt eine Schränkung auf, welche von der Rotorblattwurzel bis hin zur Rotorblattaussenkante kontinuierlich ausgebildet ist.

Nach einer besonders bevorzugten Ausführungsform, ist sowohl die Anströmkante als auch die Abströmkante sichelförmig ausgebildet. Insbesondere ist die sichelförmige Ausbildung in Verbindung mit einer Wölbung des Rotorblattes vorteilhaft. Durch die Wölbung und die Sichelform wird ein hoher Einstellwinkel im Bereich der Rotorblattwurzel erreicht. Dies ist besonders für die eigenständige Startfunktion des Rotorblattes zweckmäßig. Aufgrund der erwünschten Widerstandsflügelfunktion im äußeren Bereich des Rotorblattes, reduziert sich der Einstellwinkel nach außen verlaufend, was zusätzlich durch die Sichelform begünstigt wird.

Um die Stabilität des Rotorblattes im Betrieb zu erhöhen und um die Flatterneigung zu reduzieren, weist die Rotorflügelmittellinie in Bezug auf eine Flügellängsachse in Rotationsrichtung eine Nachneigung auf. Der geometrische Druckpunkt des Rotorblattes wird auf diese Art und Weise nach außerhalb des Rotorblattkörpers verlagert, wodurch ein mögliches Flattern stark reduziert werden kann. Das Unterdrücken des Flatterns wird somit durch ein Drehmoment unterstützt, welches das Rotorblatt in einer Dauerspannung hält. Mit anderen Worten hat das Rotorblatt somit die Tendenz in Richtung Segelstellung.

Gemäß einer besonders bevorzugten Ausführungsform, umfasst die Nachneigung der Rotorflügelmittellinie einen Nachneigungswinkel β zwischen 1° und 10°. Nach einer weiteren Ausführungsform umfasst die Nachneigung der Rotorflügelmittellinie einen Nachneigungswinkel zwischen 2° und 6°. Nach einer noch weiteren Ausführungsform umfasst die Nachneigung der Rotorflügelmittellinie einen Nachneigungswinkel zwischen 3° und 4°.

Nach einer zusätzlichen Ausführungsform, weist das Rotorblatt eine in der Flügellängsachse ausgebildete Wölbung auf. Insbesondere ist die gewölbte Ausbildung in Verbindung mit einer sichelförmigen Ausbildung des Rotorblattes vorteilhaft. Durch die Wölbung und die Sichelform wird ein hoher Einstellwinkel im Bereich der Rotorblattwurzel erreicht. Dies ist beispielsweise für die eigenständige Startfunktion des Rotorblattes hilfreich. Aufgrund der erwünschten Widerstandsflügelfunktion im äußeren Bereich des Rotorblattes, reduziert sich der Einstellwinkel nach außen verlaufend, was zusätzlich durch die Sichelform begünstigt wird.

Hinsichtlich einem weiteren Aspekt der vorliegenden Erfindung, wird die Lösung der Aufgabe durch einen Rotorkranz für eine Windturbine gemäß des Anspruchs 15 definiert. Demnach umfasst der Rotorkranz eine Mehrzahl von Rotorblättern gemäß einer der vorausgehenden Ausführungsformen.

Die Vorteile des erfindungsgemäßen Rotorkranzes entsprechen in ähnlicher Form den Vorteilen des erfindungsgemäßen Rotorblattes, wodurch beispielsweise eine verbesserte Wirbelablösung an der Abströmkante und insbesondere in dem an den Abströmkantenabschnitt angrenzenden Bereich der Abströmkante jedes Rotorblattes erreicht werden kann. Dadurch kann ein signifikant erhöhter Wirkungsgrad der gesamten Windturbinenanlage erreicht werden. Zusätzlich lässt sich eine erhebliche Lärmreduktion bewirken, welche den Einsatz des erfindungsgemäßen Rotorkranzes deutlich vielseitiger werden lässt. Beispielsweise ist es somit möglich eine Windturbine mit einem erfindungsgemäßen Rotorblatt in unmittelbarer Nähe von Wohngebieten einzusetzen.

Nach einer besonderen Ausführungsform, umfasst der Rotorkranz mindestens 2 und maximal 8 Rotorblätter. Nach einer weiteren Ausführungsform umfasst der Rotorkranz 6 Rotorblätter. Gemäß umfangreicher wissenschaftlicher Versuche und Windkanaltests weist der erfindungsgemäße Rotorkranz mit genau 6 Rotorblättern einen maximalen Wirkungsgrad auf. Dies wird dadurch begründet, dass ein Abstand zwischen einer Abströmkante eines Rotorblattes und der Anströmkante eines nachfolgenden Rotorblattes so ausgebildet ist, dass sich das Fluid zwischen den Rotorblättern im Betriebszustand der Windturbine möglichst beruhigen kann. Dies ermöglicht optimale Strömungsvoraussetzungen für das nachfolgende Rotorblatt und erhöht den Wirkungsgrad. Hier besteht ein enger Wirkungszusammenhang zur Schnelllaufzahl des gesamten Rotorkranzes.

Nach einer zusätzlichen Ausführungsform, weist der Rotorkranz eine Schnelllaufzahl von maximal 7 auf. Nach einer weiteren Ausführungsform, weist der Rotorkranz eine Schnelllaufzahl von maximal 4 auf. Nach einer noch weiteren Ausführungsform, weist der Rotorkranz eine Schnelllaufzahl von 1,5 auf.

Die Schnelllaufzahl ist als das Verhältnis von Umfangsgeschwindigkeit zu Windgeschwindigkeit definiert. Bekannte Windturbinen im Stand der Technik weisen Schnelllaufzahlen im Bereich von 5 bis 8 auf und werden als sogenannte Schnellläufer bezeichnet. Der erfindungsgemäße Rotorkranz ist als sogenannter Langsamläufer zu bezeichnen, da auch eine Schnelllaufzahl von 1,5 erreichbar ist.

Gemäß einem weiteren Aspekt der vorliegenden Erfindung, wird die Lösung der Aufgabe durch eine Windturbine mit einem Rotorblatt oder einem Rotorkranz gemäß einer der vorausgehenden Ausführungsformen gelöst.

Die Vorteile der erfindungsgemäßen Windturbine entsprechen in ähnlicher Form den Vorteilen des erfindungsgemäßen Rotorblattes oder des erfindungsgemäßen Rotorkranzes. Auch mit der erfindungsgemäßen Windturbine wird eine verbesserte Wirbelablösung an der Abströmkante jedes Rotorblattes erreicht. Dadurch wird ein deutlich erhöhter Wirkungsgrad der Windturbinenanlage erreicht. Zusätzlich lässt sich eine erhebliche Lärmreduktion bewirken, die den Einsatz der erfindungsgemäßen Windturbine vielseitiger werden lässt. Die erfindungsgemäße Windturbine kann beispielsweise in unmittelbarer Nähe von Wohngebieten eingesetzt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Ausführungsform eines erfindungsgemäßen Rotorblattes,
- Fig. 2: eine weitere Ausführungsform eines erfindungsgemäßen Rotorblattes mit Nachneigungswinkel,
- Fig. 3A: eine Querschnittsansicht eines erfindungsgemäßen Rotorblattes im Schnitt A-A der Figur 1,
- Fig. 3B: eine Querschnittsansicht eines erfindungsgemäßen Rotorblattes im Schnitt B-B der Figur 1,
- Fig. 3C: eine Querschnittsansicht eines erfindungsgemäßen Rotorblattes im Schnitt C-C der Figur 1,
- Fig. 3D: eine Querschnittsansicht eines erfindungsgemäßen Rotorblattes im Schnitt D-D der Figur 1,
- Fig. 4: eine Seitenansicht eines erfindungsgemäßen Rotorblattes aus der Ansicht E-E der Figur 1, und
- Fig. 5: eine schematische Ansicht eines erfindungsgemäßen Rotorkranzes.

Grundsätzlich sind in den Figuren gleiche Teile mit gleichen Bezugszeichen versehen.

### Wege zur Ausführung der Erfindung

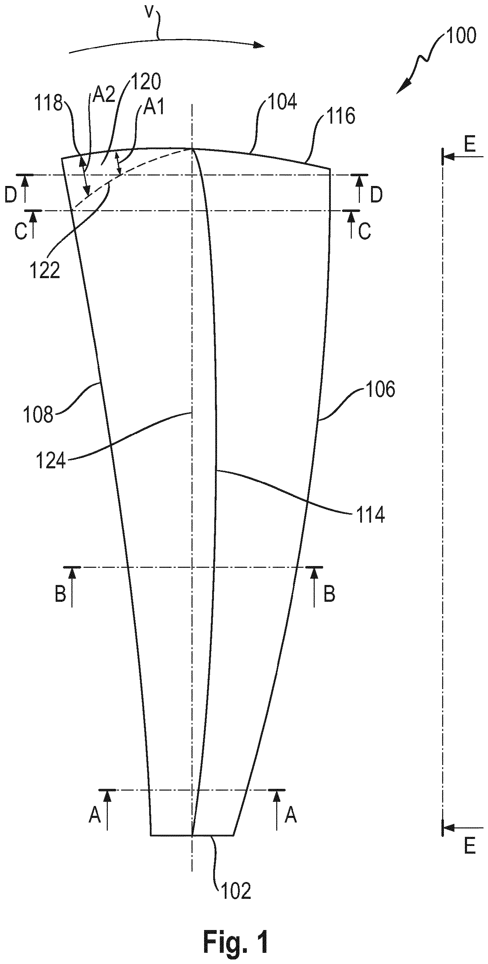

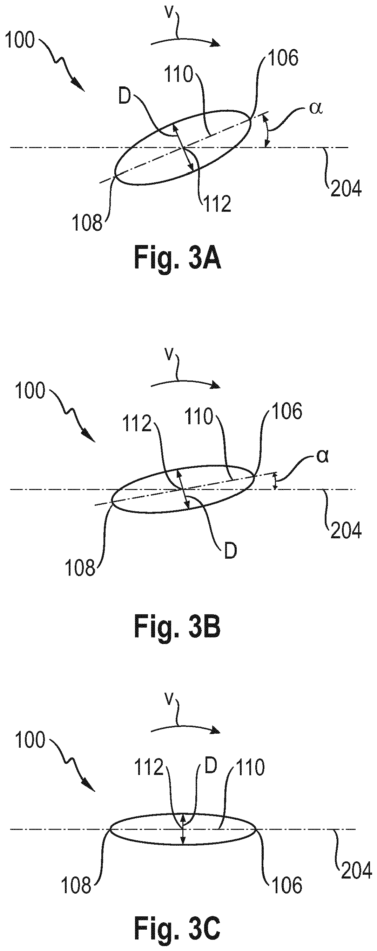

Die Figur 1 zeigt eine Ausführungsform eines erfindungsgemäßen Rotorblattes 100. Das Rotorblatt 100 ist dazu geeignet mit einer Mehrzahl von Rotorblättern 100 einen Rotorkranz 200 (nicht gezeigt) auszubilden. Ein unterer Abschnitt des Rotorblattes 100 umfasst eine Rotorblattwurzel 102, welche im Betrieb des Rotorblattes 100 an eine Nabe einer Windturbine angrenzt. An einem äußeren Ende des Rotorblattes 100, welches der Rotorblattwurzel 102 entgegengesetzt ist, befindet sich die Rotorblattaussenkante 104 des Rotorblattes 100. Oberhalb der Rotorblattaussenkante 104 ist die Drehrichtung v des Rotorkranzes 200 im Einsatz durch einen Pfeil angedeutet. Zusätzlich weist das Rotorblatt 100 eine Anströmkante 106 und eine Abströmkante 108 auf. Sowohl die Anströmkante 106 als auch die Abströmkante 108 sind jeweils sichelförmig ausgebildet, wobei der jeweilige Bauch beider sichelförmigen Krümmungen in Drehrichtung v des Rotorblattes 100 nach vorne ausgebildet ist. Mit anderen Worten ist die Sichelkrümmung des Rotorblattes 100 gegen die Drehrichtung v ausgebildet. Von der Anströmkante 106 zur Abströmkante 108 definiert jeweils eine geradlinige Verbindung eine Profilsehne 110 (nicht gezeigt). Ausführlicher wird hier in der Beschreibung der Figuren 3A bis 3D eingegangen. Die Länge der Profilsehne 110 nimmt ausgehend von der Rotorblattwurzel 102 bis zur Rotorblattaussenkante 104 kontinuierlich zu. Die geometrische Mitte jeder Profilsehne definiert einen Profilsehnenmittelpunkt 112 (nicht gezeigt). Der kontinuierliche Verlauf bzw. die kontinuierliche Aneinanderreihung aller Profilsehnenmittelpunkte 112 von der Rotorblattwurzel 102 bis hin zur Rotorblattaußenkante 104 definieren eine Rotorflügelmittellinie 114. Die Rotorflügelmittellinie 114 ist wie die Anströmkante 106 und die Abströmkante 108 sichelförmig ausgebildet.

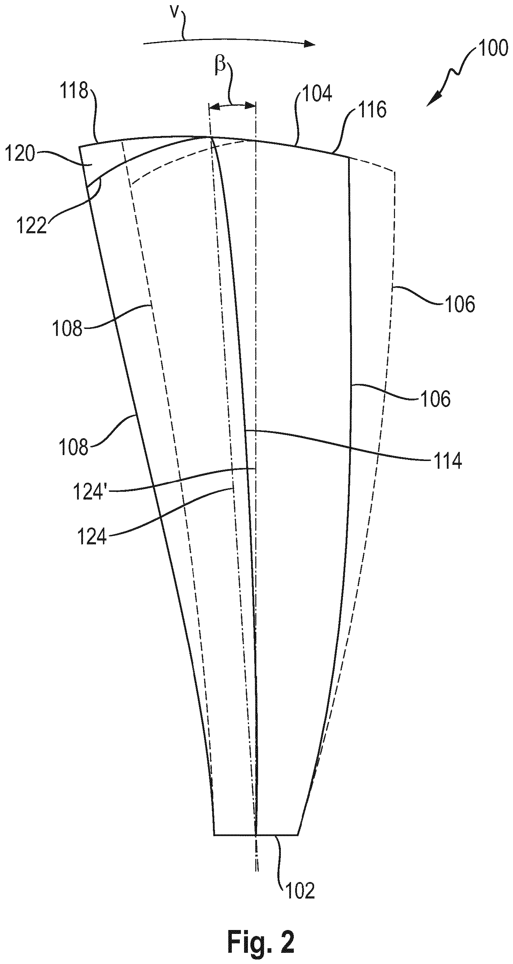

Am oberen Ende des Rotorblattes 100 teilt die Rotorflügelmittellinie 114 die Rotorblattaussenkante 104 in einen Anströmkantenabschnitt 116 und einen Abströmkantenabschnitt 118. Der Anströmkantenabschnitt 116 definiert eine in Drehrichtung v vordere Hälfte der Rotorblattaussenkante 104, welche unmittelbar an die Anströmkante 106 angrenzt. Der Abströmkantenabschnitt 118 definiert entsprechend eine in Drehrichtung v hintere Hälfte der Rotorblattaussenkante 104, welche unmittelbar an die Abströmkante 108 angrenzt. Im Bereich des Abströmkantenabschnitts 118 befindet sich ein Winglet 120. Die Ausdehnung des Winglets 120 ist bevorzugt auf den Bereich des Abströmkantenabschnitts 118 beschränkt, jedoch kann sich das Winglet auch darüber hinaus erstrecken. Beispielsweise kann sich das Winglet 120 über den gesamten Abströmkantenabschnitt 118 bis in den Anströmkantenabschnitt 118 hinein erstrecken. Eine Höhe des Winglets 120 nimmt in Richtung der Abströmkante 108 kontinuierlich zu. Als Höhe ist hier der Abstand der Wingletaußenkante von dem Rotorblattkörper zu verstehen. Somit ist die Wingletaußenkante unmittelbar an der Abströmkante 108 höher (siehe A2) als an einem weiter innenliegenden Punkt der Wingletaussenkante (siehe A1). Somit ist die Höhe des Winglets 120 in Drehrichtung v am hinteren Ende der Rotorblattaußenkante 104 in einem an die Abströmkante 108 angrenzenden Abschnitt am größten. Das Winglet 120 bildet eine in der Ebene des Rotorblattkörpers liegende Linie aus, entlang welcher der Übergang des Rotorblattes 100 in das Winglet 120 dargestellt ist. Mit anderen Worten kennzeichnet die Linie einen Knick in dem Rotorblattkörper, welcher den Fuss 122 des Winglets 120 darstellt. Der Fuss 122 des Winglets 120 bildet gegenüber der Rotorblattaussenkante 104 bzw. dem Abströmkantenabschnitt 118 einen veränderlichen Abstand A aus. Der Abstand A zwischen dem Abströmkantenabschnitt 118 und dem Fuss 122 des Winglets 120 nimmt von der Rotorflügelmittellinie 114 in Richtung der Abströmkante 108 kontinuierlich zu. Ein Abstand A1 ist somit kleiner ausgebildet als der Abstand A2. Schematisch ist zu erkennen, dass der Fuss 122 des Winglets 120 in der Rotorblattebene kreisförmig ausgebildet ist. Auf die kreisförmige Ausbildung wird insbesondere in den Figuren 2 und 6 detaillierter eingegangen. Durch die Ausbildung des Winglets 120 im Bereich des Abströmkantenabschnitts 118 wird der Abströmkantenabschnitt 118 zur Wingletaussenkante und ist vom Rotorblattkörper nach oben gebeugt.

Die Figur 2 zeigt eine weitere Ausführungsform eines erfindungsgemäßen Rotorblattes 100 mit einem Nachneigungswinkel β. Der Nachneigungswinkel β ergibt sich aus einer Schrägstellung der Flügellängsachse 124, 124' gegen die Drehrichtung v des Rotorblattes 100. Die Nachneigung erhöht die Stabilität des Rotorblattes 100 im Betrieb und reduziert zusätzlich die Flatterneigung. Wie bereits ausgeführt, wird hierbei der geometrische Druckpunkt des Rotorblattes 100 verlagert, wodurch ein Drehmoment bewirkt wird, welches das Rotorblatt 100 in einer Dauerspannung hält. Der optimale Nachneigungswinkel β beträgt gemäß der Figur 2 etwa 3° bis 4°. Auch diese Ausführungsform zeigt schematisch die kreisförmige Ausbildung des Fusses 122 des Winglets 120, welcher in der Rotorblattebene liegend ausgebildet ist. Auf die kreisförmige Ausbildung wird noch detaillierter in der Beschreibung der Figur 6 eingegangen. Zusätzlich ist an dieser Stelle auf die Vorteile des Zusammenwirkens zwischen dem Nachneigungswinkel β und dem kreisförmigen Fuss 122 des Winglets 120 einzugehen. Indem das Rotorblatt 100 bzw. die Flügellängsachse 124, 124' einen Nachneigungswinkel β aufweist und indem der Fuss 122 kreisförmig ausgebildet ist, kann in einer optimalen Konfiguration der kreisförmige Fuss 122 des Winglets 120 Teil eines Rotationskreises 202 des Rotorblattes 100 sein. Mit anderen Worten sind der Radius und Mittelpunkt des kreisförmigen Fusses 122 sowie der Radius und der Mittelpunkt eines Rotationskreises des Rotorblatts 100 identisch. Auf eine erneute Beschreibung identischer Merkmale der vorausgehenden Figur wird an dieser Stelle verzichtet.

Die Figur 3A zeigt eine Querschnittsansicht eines erfindungsgemäßen Rotorblattes 100 im Schnitt A-A der Figur 1. Der Schnitt A-A befindet sich angrenzend oder zumindest im Bereich der Rotorblattwurzel 102. Die Profilsehne 110 hat im Bereich der Rotorblattwurzel 102 die geringste Länge, da die Länge der Profilsehne 110 in Richtung der Rotorblattaußenkante 104 kontinuierlich zunimmt. Eine Schnittansicht einer Rotationsebene 204 zeigt diejenige Ebene an, ich welcher sich das Rotorblatt 100 und der gesamte Rotorkranz 200 (nicht gezeigt) im Betrieb der Windturbine 300 (nicht gezeigt) bewegen. Die Profilsehne 110 schließt mit der Rotationsebene 204 einen Einstellwinkel α ein. Dieser Einstellwinkel α beträgt an der Rotorblattwurzel 102 in etwa 30°. Wie bereits ausgeführt kommen den unterschiedlichen Abschnitten des Rotorblattes 100 unterschiedliche Aufgaben bzw. Wirkungen zu. Der Bereich der Rotorblattwurzel 102 ermöglicht das eigenständige Anlaufen oder Starten des Rotorkranzes 200. Mit anderen Worten ist von Bedeutung auch bei geringen Luft- bzw. Windgeschwindigkeiten Auftrieb zu ermöglichen und somit das Anlaufen des Rotorblattes 100 bewirken. Dies wird durch einen bestimmten Einstellwinkel α ermöglicht, welcher in dieser vorliegenden Ausführungsform in etwa 30° beträgt. Durch den Einstellwinkel α wird ein Druckunterschied erzeugt, welcher die Anlauffunktion unterstützt. Ein weiterer Parameter, welcher den Druckunterschied beeinflusst ist die Profildicke D, welche das zur Profilsehne 106 orthogonal angeordnete Maß der Rotorblattdicke darstellt. Die Drehrichtung v ist in der Figur 3A als Bewegungsrichtung der Rotorblattes 100 zu verstehen, wobei die Anströmkante 106 und die Abströmkante 108 erneut die Bewegungsrichtung der Rotorblattes 100 verdeutlichen. Der Schnittpunkt von Profilsehne 110 und Rotationsebene 204 entspricht dem Profilsehnenmittelpunkt 112.

Die Figur 3B zeigt eine Querschnittsansicht eines erfindungsgemäßen Rotorblattes 100 im Schnitt B-B der Figur 1. Der Schnitt B-B befindet sich in einem mittleren Abschnitt des Rotorblattes 100 zwischen Rotorblattwurzel 102 und Rotorblattaussenkante 104. Die Profilsehne 110 ist in diesem Bereich etwas länger als im Bereich der Rotorblattwurzel 102. Die Rotationsebene 204 zeigt erneut die Bewegungsebene des Rotorblattes 100 und des gesamten Rotorkranzes 200 (nicht gezeigt) im Betrieb und die Profilsehne 110 schließt mit der Rotationsebene 204 einen Einstellwinkel α ein. Der Einstellwinkel α ist etwas kleiner als im Bereich der Rotorblattwurzel 102 und liegt zwischen 0° und 30°. Der Schnittpunkt von Profilsehne 110 und Rotationsebene 204 entspricht erneut dem Profilsehnenmittelpunkt 112. Die Profildicke D ist etwas kürzer dimensioniert als die Profildicke D im Schnitt A-A der in Figur 3A. Auf eine erneute Beschreibung identischer Merkmale der vorausgehenden Figur wird an dieser Stelle verzichtet.

Die Figur 3C zeigt eine Querschnittsansicht eines erfindungsgemäßen Rotorblattes 100 im Schnitt C-C der Figur 1. Der Schnitt C-C befindet sich in einem Abschnitt des Rotorblattes 100, welcher sich angrenzend oder zumindest in der Nähe der Rotorblattaussenkante 104 befindet. Die Profilsehne 110 ist in diesem Bereich etwas länger als im Bereich des mittleren Schnitts B-B und deutlich länger als im Schnitt A-A im Bereich der Rotorblattwurzel 102. Die Profilsehne 110 selbst ist nahezu parallel zur Rotationsebene 204 ausgebildet. Der Einstellwinkel α liegt in etwa bei 0°. Die Profildicke D ist nochmals etwas kürzer dimensioniert als die Profildicke D im Schnitt A-A der Figur 3A und als die Profildicke D im Schnitt B-B der Figur 3B. Auf einer erneute Beschreibung identische Merkmale der vorausgehenden Figuren wird an dieser Stelle verzichtet.

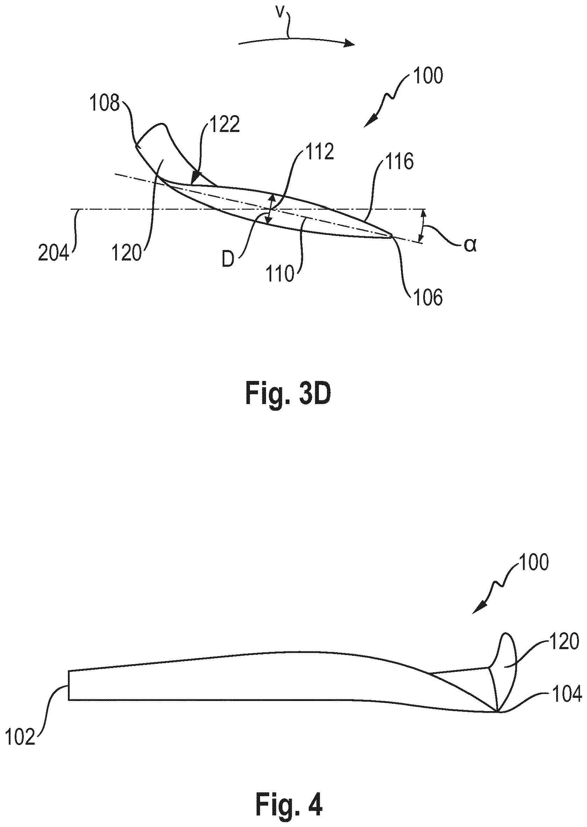

Die Figur 3D zeigt eine Querschnittsansicht eines erfindungsgemäßen Rotorblattes 100 im Schnitt D-D der Figur 1. Der Schnitt D-D befindet sich in einem Abschnitt des Rotorblattes 100, welcher sich unmittelbar angrenzend an der Rotorblattaussenkante 104 befindet. Die Profilsehne 110 ist in diesem Bereich ebenfalls länger als im Bereich des mittleren Schnitts B-B und länger als im Schnitt A-A des Bereichs der Rotorblattwurzel 102 ausgebildet. Die Profilsehne 110 und die Rotationsebene 204 schließen gemeinsam einen Einstellwinkel α ein, welcher im Vergleich zu den vorausgehenden Figuren 3A und 3B ein negatives Vorzeichen aufweist. Der Einstellwinkel α beträgt hier etwa - 10°, da sich der Einstellwinkel α unterhalb der Rotationsebene 204 erstreckt. Die Profildicke D ist nochmals etwas kürzer ausgebildet als die Profildicke D im Schnitt B-B der Figur 3B. Im Bereich der Abströmkante 108 befindet sich ein nach oben verformter Abschnitt, welcher einen Teil des Winglets 120 im Schnitt D-D darstellt. Auf eine erneute Beschreibung identischer Merkmale der vorausgehenden Figuren wird an dieser Stelle verzichtet.

Die Figur 4 zeigt eine Seitenansicht eines erfindungsgemäßen Rotorblattes 100 aus der Ansicht E-E der Figur 1. In der Seitenansicht zeigt das Rotorblatt 100 eine in der Flügellängsachse 124 (nicht gezeigt) ausgebildete Wölbung. Die Wölbung ist somit zwischen der Rotorblattwurzel 102 und der Rotorblattaussenkante 104 ausgebildet und ist durch eine Schränkung überlagert, welche sich durch die unterschiedlichen Einstellwinkel α gemäß der Schnittanschichten A-A bis D-D der Figuren 3A bis 3D ergibt. An der Rotorblattaussenkante 104 ist das Winglet 120 angeordnet, welches sich lediglich im Bereich des Abströmkantenabschnitts 118 (nicht gezeigt) befindet und deshalb in der Seitenansicht nur teilweise sichtbar ist.

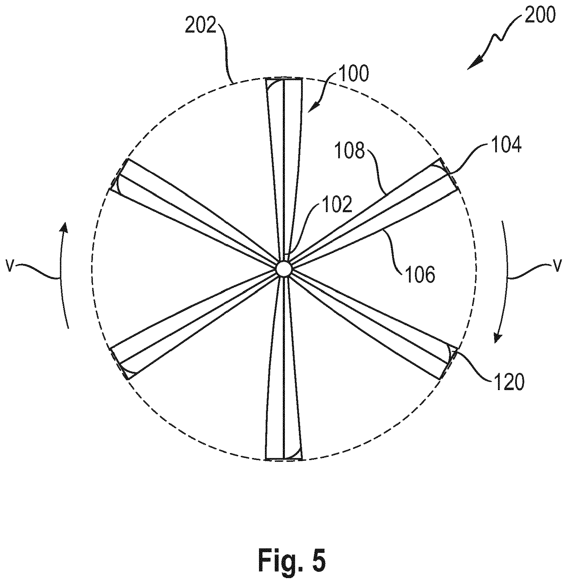

Die Figur 5 zeigt eine schematische Ansicht eines erfindungsgemäßen Rotorkranzes 200. Der Rotorkranz 200 umfasst insgesamt sechs Rotorblätter 100. Die Drehrichtung v ist schematisch durch Richtungspfeile und der Rotationskreis 202 ist schematisch am Umfang des Rotorkranzes 200 angedeutet. Der Rotorkranz 200 umfasst genau sechs Rotorblätter 100, weil dadurch der Wirkungsgrad besonders hoch ist. Dies ist mit dem optimalen Abstand zwei aufeinander folgender Rotorblätter 100 begründet. Ein Fluid kann sich somit nach dem Verlassen einer Abströmkante 108 eines Rotorblattes 100 ausreichend beruhigen, wodurch möglichst optimale Verhältnisse für die Anströmkante des nachfolgenden Rotorblattes 100 ergeben. Dies ermöglicht optimale Strömungsvoraussetzungen und erhöht somit den Wirkungsgrad der Windturbine.

Zusammenfassend ist festzustellen, dass die Ausführungsformen des erfindungsgemäßen Rotorblattes miteinander kombinierbar sind. Keines der offenbarten Merkmale schließt die Kombination mit einem anderen Merkmal aus und einzelne Merkmalskombinationen stehen miteinander in Wechselwirkung und bilden synergetische Effekte aus. Beispielsweise nimmt die Profildicke D von der Rotorblattwurzel 102 zu der Rotorblattaussenkante 104 hin ab. Dies ist ausführlich in den Figuren 3A bis 3D beschrieben. Weiterhin ist in den Figuren 3A bis 3D beschrieben, dass die Profilsehnen 110 in ihrer Länge zunehmen. Um ein besonders reibungsarmen Übergang von der Rotorblattwurzel 102 zu der Rotorblattaussenkante 104 zu realisieren, ist ein Verhältnis der Profildicke D zur der Länge der Profilsehne 110 von der Rotorblattwurzel 102 zu der Rotorblattaussenkante 104 nahezu konstant ausgebildet. Beispielsweise wird dadurch die Saugkraft am äußeren Ende abgeschwächt, wodurch die Ausbildung von Druckunterschieden reduziert werden kann. Ein weiteres Beispiel für einen synergetischen Effekt zeigt sich anhand der Schränkung des Rotorblattes 100. Die Schränkung verläuft von der Rotorblattwurzel 102 bis hin zur Rotorblattaussenkante 104 kontinuierlich und ist anhand der Einstellwinkel α zwischen Profilsehne 110 und Rotationsebene in den entsprechenden Schnitte A-A bis D-D erklärt. Im Endergebnis ist der erfindungsgemäße Rotorkranz als sogenannter Langsamläufer besonders effizient, da auch eine Schnelllaufzahl von bis zu 1,5 realisierbar ist. Zusätzlich ist die sichelförmige Ausbildung in Verbindung mit einer Wölbung des Rotorblattes besonders vorteilhaft. Durch die Wölbung und die Sichelform wird ein hoher Einstellwinkel α im Bereich der Rotorblattwurzel 102 erreicht. Dies ist besonders für die eigenständige Startfunktion des Rotorblattes zweckmäßig. Aufgrund der erwünschten Widerstandsflügelfunktion im äußeren Bereich des Rotorblattes, reduziert sich der Einstellwinkel α nach außen verlaufend, was zusätzlich durch die Sichelform begünstigt wird.

## Patentansprüche

1. Rotorblatt (100) für eine Windturbine, mit:
einer Rotorblattwurzel (102),
einer Rotorblattaussenkante (104),
einer Anströmkante (106) und einer Abströmkante (108), wobei die Anströmkante (106) und die Abströmkante (108) eine Profilsehne (110) definieren, deren Länge von der Rotorblattwurzel (102) zu der Rotorblattaussenkante (104) zunehmend ausgebildet ist, wobei
Profilsehnenmittelpunkte (112) von der Rotorblattwurzel (102) zur Rotorblattaußenkante (104) verlaufend eine Rotorflügelmittellinie (114) definieren, und
die Rotorflügelmittellinie (114) die Rotorblattaussenkante (104) in einen Anströmkantenabschnitt (116) und einen Abströmkantenabschnitt (118) teilt, wobei
an der Rotorblattaußenkante (104) ein Winglet (120) angeordnet ist, welches sich lediglich entlang des Abströmkantenabschnitts (118) erstreckt.

2. Rotorblatt (100) gemäß Anspruch 1, **dadurch gekennzeichnet, dass** ein Abstand (A) zwischen dem Abströmkantenabschnitt (118) und einem Fuss (122) des Winglets (120) von der Rotorflügelmittellinie (114) in Richtung der Abströmkante (108) zunimmt.

3. Rotorblatt (100) gemäß Anspruch 2, **dadurch gekennzeichnet, dass** der Fuss (122) des Winglets (120) in der Rotorblattebene kreisförmig ausgebildet ist.

4. Rotorblatt (100) gemäß einem der vorausgehenden Ansprüche, **dadurch gekennzeichnet, dass** der kreisförmige Fuss (122) des Winglets (120) Teil eines Rotationskreises (202) des Rotorblattes (100) ist.

5. Rotorblatt (100) gemäß einem der vorausgehenden Ansprüche, **dadurch gekennzeichnet, dass** eine Profildicke (D) von der Rotorblattwurzel (102) zu der Rotorblattaussenkante (104) abnimmt.

6. Rotorblatt (100) gemäß Anspruch 5, **dadurch gekennzeichnet, dass** ein Verhältnis der Profildicke (D) zur der Länge der Profilsehne (110) von der Rotorblattwurzel (102) zu der Rotorblattaussenkante (104) nahezu konstant ausgebildet ist.

7. Rotorblatt (100) gemäß einem der vorausgehenden Ansprüche, **dadurch gekennzeichnet, dass** das Rotorblatt (100) an der Rotorblattwurzel (102) einen Einstellwinkel (a) von mindestens 30° aufweist.

8. Rotorblatt (100) gemäß einem der vorausgehenden Ansprüche, **dadurch gekennzeichnet, dass** das Rotorblatt (100) an der Rotorblattaussenkante (104) einen Einstellwinkel (a) von maximal 5° aufweist.

9. Rotorblatt (100) gemäß einem der vorausgehenden Ansprüche, **dadurch gekennzeichnet, dass** ein Einstellwinkel (a) an der Rotorblattaussenkante (104) an der Anströmkante (106) größer Null und an der Abströmkante (108) kleiner oder gleich Null ist.

10. Rotorblatt (100) gemäß einem der vorausgehenden Ansprüche, **dadurch gekennzeichnet, dass** das Rotorblatt (100) eine Schränkung aufweist, welche von der Rotorblattwurzel (102) bis hin zur Rotorblattaussenkante (104) kontinuierlich ausgebildet ist.

11. Rotorblatt (100) gemäß einem der vorausgehenden Ansprüche, **dadurch gekennzeichnet, dass** sowohl die Anströmkante (106) als auch die Abströmkante (108) sichelförmig ausgebildet ist.

12. Rotorblatt (100) gemäß einem der vorausgehenden Ansprüche, **dadurch gekennzeichnet, dass** die Rotorflügelmittellinie (114) in Bezug auf eine Flügellängsachse (124) in Rotationsrichtung eine Nachneigung aufweist.

13. Rotorblatt (100) gemäß Anspruch 12, **dadurch gekennzeichnet, dass** die Nachneigung des Rotorflügelmittellinie (114) einen Nachneigungswinkel (β) zwischen 1° und 10°, insbesondere zwischen 2° und 6°, insbesondere zwischen 3° und 4° umfasst.

14. Rotorblatt (100) gemäß einem der vorausgehenden Ansprüche, **dadurch gekennzeichnet, dass** das Rotorblatt (100) eine in der Flügellängsachse (124) ausgebildete Wölbung aufweist.

15. Rotorkranz (200) für eine Windturbine, mit einer Mehrzahl von Rotorblättern (100) gemäß einem der Ansprüche 1 bis 14.

16. Rotorkranz (200) gemäß Anspruch 15, **dadurch gekennzeichnet, dass** das der Rotorkranz (200) mindestens 2 und maximal 8 Rotorblätter (100), insbesondere 6 Rotorblätter (100) umfasst.

17. Rotorkranz (200) gemäß Anspruch 15 oder 16, **dadurch gekennzeichnet, dass** der Rotorkranz (200) eine Schnelllaufzahl von maximal 7, insbesondere von maximal 4, insbesondere von 1,5 aufweist.

18. Windturbine (300) mit einem Rotorblatt (100) gemäß einem der Ansprüche 1 bis 14.

## Claims

1. A rotor blade (100) for a wind turbine, comprising:
a rotor blade root (102),
a rotor blade outer edge (104),
a leading edge (106) and a trailing edge (108), the leading edge (106) and the trailing edge (108) defining a profile chord (110), the length of which is configured so as to increase from the rotor blade root (102) to the rotor blade outer edge (104),
profile chord center points (112) defining a rotor wing center line (114) in a manner which runs from the rotor blade root (102) to the rotor blade outer edge (104), and
the rotor wing center line (114) dividing the rotor blade outer edge (104) into a leading edge section (116) and a trailing edge section (118),
**characterized in that**
a winglet (120) which extends merely along the trailing edge section (118) is arranged on the rotor blade outer edge (104).

2. The rotor blade (100) as claimed in claim 1, **characterized in that** a spacing (A) between the trailing edge section (118) and a base (122) of the winglet (120) increases from the rotor wing center line (114) in the direction of the trailing edge (108).

3. The rotor blade (100) as claimed in claim 2, **characterized in that** the base (122) of the winglet (120) is of circular configuration in the rotor blade plane.

4. The rotor blade (100) as claimed in one of the preceding claims, **characterized in that** the circular base (122) of the winglet (120) is part of a rotation circle (202) of the rotor blade (100).

5. The rotor blade (100) as claimed in one of the preceding claims, **characterized in that** a profile thickness (D) decreases from the rotor blade root (102) to the rotor blade outer edge (104).

6. The rotor blade (100) as claimed in claim 5, **characterized in that** a ratio of the profile thickness (D) to the length of the profile chord (110) is of almost constant configuration from the rotor blade root (102) to the rotor blade outer edge (104).

7. The rotor blade (100) as claimed in one of the preceding claims, **characterized in that** the rotor blade (100) has an angle of incidence (□) of at least 30° on the rotor blade root (102).

8. The rotor blade (100) as claimed in one of the preceding claims, **characterized in that** the rotor blade (100) has an angle of incidence (□) of at most 5° on the rotor blade outer edge (104).

9. The rotor blade (100) as claimed in one of the preceding claims, **characterized in that** an angle of incidence (□) on the rotor blade outer edge (104) is greater than zero at the leading edge (106) and is less than or equal to zero at the trailing edge (108).

10. The rotor blade (100) as claimed in one of the preceding claims, **characterized in that** the rotor blade (100) has a twist which is of continuous configuration from the rotor blade root (102) as far as the rotor blade outer edge (104).

11. The rotor blade (100) as claimed in one of the preceding claims, **characterized in that** both the leading edge (106) and the trailing edge (108) are of sickle-shaped configuration.

12. The rotor blade (100) as claimed in one of the preceding claims, **characterized in that** the rotor wing center line (114) has a supplemental inclination in the rotational direction in relation to a wing longitudinal axis (124).

13. The rotor blade (100) as claimed in claim 12, **characterized in that** the supplemental inclination of the rotor wing center line (114) comprises a supplemental inclination angle (□) of between 1° and 10°, in particular between 2° and 6°, in particular between 3° and 4°.

14. The rotor blade (100) as claimed in one of the preceding claims, **characterized in that** the rotor blade (100) has a curvature which is configured in the wing longitudinal axis (124).

15. A rotor rim (200) for a wind turbine, with a plurality of rotor blades (100) as claimed in one of claims 1 to 14.

16. The rotor rim (200) as claimed in claim 15, **characterized in that** the rotor rim (200) comprises at least 2 and at most 8 rotor blades (100), in particular 6 rotor blades (100).

17. The rotor rim (200) as claimed in claim 15 or 16, **characterized in that** the rotor rim (200) has a tip speed ratio of at most 7, in particular of at most 4, in particular of 1.5.

18. A wind turbine (300) with a rotor blade (100) as claimed in one of claims 1 to 14.

## Revendications

1. Une pale de rotor (100) pour une éolienne, comprenant:
une racine de pale de rotor (102),
un bord extérieur de pale de rotor (104),
un bord d'attaque (106) et un bord de fuite (108), le bord d'attaque (106) et le bord de fuite (108) définissant une corde de profil (110), dont la longueur est configurée de manière à augmenter depuis la racine de pale de rotor (102) jusqu'au bord extérieur de pale de rotor (104), dans laquelle
des points centraux de la corde de profil (112) définissent une ligne centrale d'aile de rotor (114) s'étendant de la racine de pale de rotor (102) au bord extérieur de pale de rotor (104), et
la ligne centrale d'aile de rotor (114) divise le bord extérieur de pale de rotor (104) en une partie de bord d'attaque (116) et une partie de bord de fuite (118),
**caractérisé en ce que**
une winglet (120) est disposée sur le bord extérieur de pale de rotor (104), laquelle s'étend uniquement le long de la partie de bord de fuite (118).

2. Pale de rotor (100) selon la revendication 1, **caractérisée en ce qu'**un espacement (A) entre la partie de bord de fuite (118) et une base (122) de la winglet (120) augmente à partir de la ligne centrale (114) de l'aile du rotor en direction du bord de fuite (108).

3. Pale de rotor (100) selon la revendication 2, **caractérisée en ce que** la base (122) de la winglet (120) est configurée de manière circulaire dans le plan de la pale de rotor.

4. Pale de rotor (100) selon l'une des revendications précédentes, **caractérisée en ce que** la base circulaire (122) de la winglet (120) fait partie d'un cercle de rotation (202) de la pale de rotor (100).

5. Pale de rotor (100) selon l'une des revendications précédentes, **caractérisée en ce que** une épaisseur de profil (D) diminue depuis la racine (102) de pale de rotor jusqu'au bord extérieur (104) de pale de rotor.

6. Pale de rotor (100) selon la revendication 5, **caractérisée en ce qu'**un rapport entre l'épaisseur de profil (D) et la longueur de la corde de profil (110) est formé de manière presque constante depuis la racine de pale de rotor (102) jusqu'au bord extérieur de pale de rotor (104).

7. Pale de rotor (100) selon l'une des revendications précédentes, **caractérisée en ce que** la pale de rotor (100) présente un angle d'incidence (□) d'au moins 30° à la racine de pale de rotor (102).

8. Pale de rotor (100) selon l'une des revendications précédentes, **caractérisée en ce que** la pale de rotor (100) présente un angle d'incidence (□) de maximum 5° sur le bord extérieur de pale de rotor (104).

9. Pale de rotor (100) selon l'une des revendications précédentes, **caractérisée en ce qu'**un angle d'incidence (□) sur le bord extérieur de pale de rotor (104) est supérieur à zéro au niveau du bord d'attaque (106) et est inférieur ou égal à zéro au niveau du bord de fuite (108).

10. Pale de rotor (100) selon l'une des revendications précédentes, **caractérisée en ce que** la pale de rotor (100) présente une torsion qui est configurée de manière continue depuis la racine de pale de rotor (102) jusqu'au bord extérieur de pale de rotor (104).

11. Pale de rotor (100) selon l'une des revendications précédentes, **caractérisée en ce que** le bord d'attaque (106) et le bord de fuite (108) ont tous deux une configuration en forme de faucille.

12. Pale de rotor (100) selon l'une des revendications précédentes, **caractérisée en ce que** la ligne centrale d'aile de rotor (114) présente une inclinaison supplémentaire dans le sens de rotation par rapport à un axe longitudinal d'aile (124).

13. Pale de rotor (100) selon la revendication 12, **caractérisée en ce que** l'inclinaison supplémentaire de la ligne centrale d'aile de rotor (114) comprend un angle d'inclinaison supplémentaire (□) compris entre 1° et 10°, en particulier entre 2° et 6°, en particulier entre 3° et 4°.

14. Pale de rotor (100) selon l'une des revendications précédentes, **caractérisée en ce que** la pale de rotor (100) présente une courbure qui est configurée dans l'axe longitudinal de l'aile (124).

15. Couronne de rotor (200) pour une éolienne, avec une pluralité de pales de rotor (100) selon l'une des revendications 1 à 14.

16. Couronne de rotor (200) selon la revendication 15, **caractérisée en ce que** la couronne de rotor (200) comprend au minimum 2 et au maximum 8 pales de rotor (100), en particulier 6 pales de rotor (100).

17. Couronne de rotor (200) selon la revendication 15 ou 16, **caractérisée en ce que** la couronne de rotor (200) présente un coefficient maximum de puissance de 7, en particulier de maximum 4, en particulier de 1,5.

18. Eolienne (300) comprenant une pale de rotor (100) selon l'une des revendications 1 à 14.
